(19) Europäisches Patentamt
European Patent Office
Office européen des brevets

(11) Publication number: **0 162 221 B1**

# (12) EUROPEAN PATENT SPECIFICATION

(45) Date of publication of patent specification: **11.11.92** (51) Int. Cl.5: **G07F 7/10**

(21) Application number: **85103117.9**

(22) Date of filing: **18.03.85**

## (54) Financial transaction processing system using on IC card.

(30) Priority: **19.03.84 JP 53949/84**
**21.03.84 JP 54966/84**

(43) Date of publication of application:
**27.11.85 Bulletin 85/48**

(45) Publication of the grant of the patent:
**11.11.92 Bulletin 92/46**

(84) Designated Contracting States:
**AT BE CH DE FR GB IT LI LU NL SE**

(56) References cited:
**WO-A-83/03018**
**DE-A- 3 222 288**
**FR-A- 2 471 003**
**GB-A- 2 011 671**

**PATENT ABSTRACTS OF JAPAN, vol. 5, no. 64 (P-59)[736], 30th April 1981; & JP-A-56 14 369 (FUJITSU K.K.) 12-02-1981**

**NEUES AUS DER TECHNIK, nos. 4/5, 15th September 1980, page 2, Würzburg, DE; "Kreditkarte mit Tastenfeld (und Wiedergabeanordnung)"**

(73) Proprietor: **OMRON TATEISI ELECTRONICS CO.**
**10, Tsuchido-cho Hanazono Ukyo-ku**
**Kyoto 616(JP)**

(72) Inventor: **Yoshida, Shinya Omron Tateisi Electronics Co.**
**10, Tsuchido-Cho Hanazono Ukyo-ku**
**Kyoto-shi Kyoto-fu(JP)**
Inventor: **Nagata, Masanori Omron Tateisi Electronics Co.**
**10, Tsuchido-Cho Hanazono Ukyo-ku**
**Kyoto-shi Kyoto-fu(JP)**

(74) Representative: **WILHELMS, KILIAN & PARTNER Patentanwälte**
**Eduard-Schmid-Strasse 2**
**W-8000 München 90(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to an IC (Integrated Circuit) card and a financial transaction processing system using the IC card, and particularly, relates to an IC card capable of storing, prior to transaction, data necessary for transaction with financial bodies such as a bank and a credit company.

Presently, a magnetic card such as so-called cash card and credit card has been widely used for payment, deposit, transfer and the like through an online system in the financial bodies such as a bank and a credit company. Data for identifying a customer, such as a secret number, is magnetically stored in the magnetic card. When a transaction is performed, a customer goes to a bank at which he has a bank account, with such magnetic card, and inserts his card into a terminal such as an Automatic Teller Machine (ATM) and a cash dispenser (CD) installed therein and enters into the terminal data necessary for transactions such as a secret number, a kind of transaction and a transaction amount by operating inputting means such as a keyboard in accordance with predetermined procedures. The information of secret number read out by the terminal and information of each of transactions entered into the terminal by a customer are transmitted to a center of the bank, and in response to these informations, a center file is renewed and then an instruction for performing the transaction is provided to the terminal. Thus, any transaction is performed between the customer and the terminal.

Recently, kinds of transactions by means of an online system tend to include a transaction, such as a transfer, which is not so often used, and in consideration of recent social circumstances, it can be expected that such kind of transaction is progressively increased. Since the presently used magnetic card has only a function identifying a customer, the customer must determine transaction data such as kind of transaction and transaction amount at the time of performing a transaction and enter the same into a terminal, which means that there are increased selecting factors and operating procedures for the client in operating the terminal. Therefore, since it is expected that some customer encounters some difficulty, displaying means such as CRT is, as auxiliary means, provided in the terminal so that the procedure or order of transaction and selecting factors can be displayed to the customer. However, such auxiliary means have the limitation to some extent and, particularly, a customer who is not so familiar with terminal has difficulty in making transaction operations within a short time period, resulting in inefficiency of transaction processing.

In addition, such a conventional magnetic card is sometimes subjected to unfair use through theft, loss and the like. Such unfair use is usually made by a transaction terminal such an ATM and CD without any person in charge thereat. Of course, even in such a case, a secret number must be known to such unfair user. However, the information stored in a conventional magnetic card can be easily decoded and it is likely that such secret number tends to comprise a date of birthday, a telephone number and the like, of the customer, and hence an unfair user can easily assume such secret number. Therefore, a conventional magnetic card has a problem relating to security.

A financial transaction processing system according to the preamble of claim 1 is known from WO-A-83 03 018.

The invention is as claimed in claim 1.

Accordingly, a primary object of the present invention is to provide an integrated circuit card which can reduce load for transaction processing on the terminal side and can enhance security for transaction.

Another object of the present invention is to provide a financial transaction processing system using an integrated circuit card, which can reduce load for transaction processing on a terminal side and can enhance the security for transaction.

A primary advantage of the present invention is that the data necessary for transaction can be stored in advance in an integrated circuit card, prior to transaction processing.

A further advantage of the present invention is that after an integrated circuit card is inserted into a terminal the number of operating procedures can be largely decreased and a time period required for transaction is also reduced so that efficiency of transaction processing can be increased, because a customer can surely enter the data necessary for transaction into his integrated circuit card for storage before he goes to a bank.

Still further advantage of the present invention is that a secret relating to transaction can be completely kept since the data relating to transaction can be entered when he is alone.

In addition, a further advantage of the present invention is that even if an IC card happens to be owned by an unfair user through theft, loss and the like, it is difficult to read out the data of secret number and the like and hence the IC card is never unfairly used, since the transaction data such as secret number which may cause unfair use by the others can be erased after completion of transaction.

A still further advantage of the present invention is that a customer can know a previous transaction record through the IC card by erasing only a portion of data such as secret number after completion of transaction and by keeping the remaining transaction data unerased.

A still further advantage of the present invention is that, since the data necessary for transaction can be stored in advance, together with a desired effective time period data and the transaction processing can be permitted within the effective time period in a terminal, it is impossible to perform transaction such as payment transaction after lapse of the set effective time period, even if the IC card happens to be owned by an unfair user through theft, loss and the like, and hence an unfair use by the others can be prevented.

These objects and other objects, features, aspects and advantages of the present invention will become more apparent from the following detailed description of the present invention when taken in conjunction with the accompanying drawings.

Fig. 1 is a schematic block diagram showing an electrical structure of an integrated circuit card;

Fig. 2 is a perspective view of an integrated circuit card;

Fig. 3 is a memory map of an integrated circuit card;

Fig. 4 is a flow diagram explaining a transaction data storing operation of an integrated circuit card;

Fig. 5 is a schematic block diagram showing an electric structure of a terminal for use with an integrated circuit;

Fig. 6 is a memory map of a terminal for use with an integrated circuit card shown in Fig. 5;

Fig. 7 is a flow diagram explaining a transaction data reading operation in a financial transaction processing system;

Fig. 8 is a flow diagram explaining a transaction processing of a terminal for use with an integrated circuit card;

Fig. 9 is a flow diagram explaining a transaction processing of a terminal for use with an integrated circuit card of an embodiment of the present invention;

Fig. 10 is a memory map of an integrated circuit card of another embodiment of the present invention;

Fig. 11 is a flow diagram explaining a transaction data storing operation of an integrated circuit card of another embodiment of the present invention;

Fig. 12 is a memory map of a terminal for use with an integrated circuit card of another embodiment of the present invention;

Fig. 13 is a flow diagram explaining a transaction processing of a terminal for use with an integrated circuit card of another embodiment of the present invention.

Fig. 1 is a schematic block diagram showing an electric structure of an IC card.

The IC card has the same size and configuration as a conventional magnetic card such as a cash card and a credit card, and contains at least an IC memory such as a read only memory and a random access memory, a central processing unit made of an integrated circuit, and a plurality of, usually eight, contacts for communicating with a terminal. In a conventional magnetic card, storage capacity is rather small and it is easy to decode stored information. The feature of an IC card is that, as compared with a conventional magnetic card, a storage capacity is large and security is excellent because stored information can be made not to be decoded by the others by using a program which can not be easily read out. In addition, the IC card itself can provide some request to the terminal.

Referring to Fig. 1, an input/output port having an input/output line terminal 8 is connected through a data bus 9 to a central processing unit (CPU) 2, a read only memory (ROM) 3, a random access memory (RAM) 4, a display 5 and a keyboard 6. An electric power is supplied from a battery 7 to the input/output port 1, the central processing unit 2, the read only memory 3, the random access memory 4, the display 5 and the keyboard 6. The input/output port 1 is used for communicating with a terminal, (see Fig. 5), for use in the IC card in transaction processing. The ROM 3 stores fixed data relating to transaction processing, such as an ID number, a bank number, a branch number, an account number and an effective time period, and a program for transaction processing. The RAM 4 stores data necessary for each transaction, such as a secret number and transaction amount. The keyboard 6 is used for entering the data necessary for each transaction into the RAM 4. The display 5 displays the entered data to a user.

Fig. 2 is a perspective view of an IC card. Referring to Fig. 2, on a front surface panel of an IC card body 10, a power switch 11, a keyboard 12 including a plurality of touch keys, a liquid crystal display 13 and a plurality of contacts 14 are provided. The power switch 11 is used for supplying a power to each of constituent elements of the IC card shown in Fig. 1. The keyboard 12 is used for entering the data necessary for transaction processing into the IC card so that the data is stored in the ROM 4. The liquid crystal display 13 displays the above described entered data to a user. The contacts 14 are used for electrically connecting to the terminal when the IC card is inserted into the terminal.

Fig. 3 is a diagram showing a memory map of the IC card, which comprises a storage region in a read only memory and a storage region in a random access memory. The storage region in the ROM comprises a program storage area, an ID number storage area, a bank number storage area, a branch number storage area, an account number storage area, and an effective time period storage area. The storage region in the RAM comprises a secret number storage area, a deposit (credit) storage area, a payment storage area, a transaction number storage area, a bank-to-be-transferred area, an account-to-be-transferred area, and a transfer amount area.

Fig. 4 is a flow diagram explaining a specific operation program for entering transaction information and storing the same, prior to transaction processing, the program being stored in the ROM 3 of the IC card.

Now, referring to Figs. 1 to 4, a specific operation of the IC card when the IC card transaction data is entered will be described. The embodiment shown in Fig. 4 indicates a situation where a kind of transaction (referred to as "a transaction number" hereinafter), a secret number and a transaction amount are stored in the IC card, prior to transaction processing.

Before going to a bank at which a client has a bank account, he enters into his own IC card the above described transaction data, that is, the transaction number, the secret number and the transaction amount whenever and wherever he wishes to do so. First, the customer turns a power switch 11 of the IC card on (step S1). As a result, a power is supplied from the battery 7 to each of constituent elements of the IC card shown in Fig. 1. Then, the customer operates the keyboard 12 to select a desired transaction number, that is, the kind of transaction, to enter the same into the IC card (step S2). In this embodiment, it is assumed that the transaction number 1 denotes a payment processing, the transaction number 2 denotes a deposit processing, and the transaction number 3 denotes a transfer processing. The selected transaction number is stored in the transaction number storage area in the RAM 4 (step S3). In addition, the following data entering and storing operations are performed based on the program corresponding to the selected transaction number, stored in program storage area of the ROM 3.

If and when the customer selects the transaction number 1 (payment) (step S4), he first enters his secret number using the keyboard 12 (step S5). The secret number is stored in the secret number storage area of the RAM 4 (Fig. 3) in the IC card (step S6). Subsequently, the customer further enters an amount of payment using the keyboard 12 (step S7). The data of the payment amount is stored as well in the payment storage area of the RAM 4 (step S8). As a result, storing transaction data for payment processing is completed and then a power supply of IC card is automatically turned off in accordance with a program (step S9).

If and when the transaction number 2 (deposit) is selected (step S10), the customer enters an amount of deposit using the keyboard 12. The data of such amount is stored in the deposit storage area of the RAM 4 (step S12). As a result, the transaction data storage for deposit processing is completed, and then the power supply of the IC card is automatically turned off (step S13).

If and when the transaction number 3 (transfer) is selected (step S14), the customer first enters his secret number by using the keyboard 12 (step S15). The secret number is stored in the secret number storage area of the RAM (step S16). Subsequently, the customer enters the bank number to be transferred and the amount number thereof by using the keyboard 12 (step S17). Such data is also stored in the corresponding areas of the RAM 4 (step S18). In addition, the customer enters an amount of transfer using the keyboard 12 (step S19). The amount data is also stored in the transfer amount area of the RAM 4 (step S20). As a result, storing the data relating to transfer processing is completed and then a power supply of IC card is automatically turned off (step S21). Each of the data entered by the keyboard 12 is displayed in the liquid crystal display 13 each time the data is entered, so that the customer can confirm whether the entered data is correct or not.

As described in the foregoing, according to the present embodiment, a transaction number, a secret number, and a transaction amount can be securely stored in advance in the IC card, prior to transaction processing.

Fig. 5 is a schematic block diagram showing an electric structure of a terminal communicating with an IC card shown in Figs. 1 to 4. Referring to Fig. 5, an IC card reader 15 is a unit for communication through the input/output port 1 and the contacts 14 of the IC card as inserted. A cathode ray tube (CRT) 16 is a unit for displaying procedures of transaction and the like to a customer. A keyboard 17 is a unit which a customer communicate with the terminal, if necessary. A slip issuing machine 18 receives permission of payment from a center and issue a slip. A paper receiving portion 19 includes unit for receiving papers the customer inserts on deposit and counting the number thereof. A paper discharging portion 20 includes a unit for discharging papers to the customer. A bankbook printing portion 21 prints the transaction record on the entered bankbook when the bankbook is inserted into the terminal together with the IC card. Each of these units is connected to a control 22 through internal data buses, so that the control 22 can control operations of these units. In addition, the control 22 is also connected to a central processing unit of a center (not shown) for each bank through a line control 23 and a input/output terminal 24.

Fig. 6 is a diagram showing a memory map of a terminal for use with the IC card as shown in Fig. 5.

Fig. 7 is a flow diagram explaining a specific reading operation of a financial transaction processing system, that is, explaining a specific reading operation between the IC card shown in Fig. 1 and the terminal shown in Fig. 5.

Referring to Figs. 5 to 7, a specific reading operation of the financial transaction processing system will be described. Reading of the IC card is performed by means of half duplex communication system, which is the same as communication between a terminal and a center CPU.

First, the IC card which is the one embodiment as shown in Figs. 1 to 4 is entered into a terminal for use with the IC card, which is shown in Fig. 5 and installed in a bank (step S22). Then, an electric power is supplied to each of constituent elements of the IC card shown in Fig. 1 and the CPU 2 generates a card insert command based on the program stored in the ROM 3 and transmits the command to the IC card reader 15 of the terminal through the input/output port 1 (step S23). Upon receipt of the command by the terminal (step S24), the terminal generates an ID number request command and transmits the same to the IC card (step S25). Then, in the IC card, the central processing unit 2 receiving the ID number request command from the terminal through the input/output port 1 (step S26) transmits the ID number stored in the storage region of the ROM 3, as shown in Fig. 3, to the IC card reader 15 of the terminal through the input/output port 1 (step S27). The terminal receives such ID number (step S28) and generates a bank number request command and transmits the same to the IC card (step S29). Then, in the IC card, the central processing unit 2 receiving the bank number request command from the terminal through the input/output port 1 (step S30) transmits the bank number stored in the storage region of the ROM 3 as shown in Fig. 3 to the IC card reader 15 of the terminal through the input/output port 1 (step S31). The terminal receives such bank number (step S32) and generates an effective time period data request command and transmits the same to the IC card (step S33). Then, in the IC card, the CPU 2 receiving the effective time period data requesting command from the terminal through input/output port 1 transmits the effective time period data stored in the storage region of the ROM 3 as shown in Fig. 3 to the IC card reader of the terminal through the input/output port 1 (steps S35 and S36). As described in the foregoing, the fixed data relating to transaction, which is stored in the ROM 3 in the IC card, is first read out by the terminal. Then, the terminal generates an RAM storage contents requesting command for requesting the transaction data stored in advance in the RAM 4 in accordance with the respective programs and transmits the same to the IC card (step S37). Correspondingly, in the IC card, the central processing unit 2 receiving the RAM storage contents requesting command from the terminal through the input/output port 1 (step S38) transmits the RAM storage contents stored in the storage region of the RAM 4 as shown in Fig. 3, that is, the transaction data such as transaction number, a secret number, a transaction amount and a bank-to-be-transferred, to the IC card reader 15 of the terminal through the input/output port 1 (steps S39 and S40). The IC card completed its role by transmitting the RAM storage contents to the terminal and then a power supply is turned off in accordance with program and, upon completion of transaction processing, the IC card is returned to the customer from the terminal (step S41).

Fig. 8 is a flow diagram explaining a specific transaction processing operation of the terminal from insertion of the IC card to termination of transaction processing.

Now, referring to Figs. 1 to 8, a specific transaction processing of the terminal will be described.

From the IC card inserted into the terminal by a customer (step S42), the data relating to transaction is read out from the ROM 3 and RAM 4 shown in Fig. 7 (steps S43 and S44). First, the terminal confirm the fixed data inherent to the specific bank, such as ID number, a bank number, an effective time period data read out from the ROM 3 (steps S45, S46 and S47) and if and when any of inconsistencies occurs, the content stored in the RAM 4 of the IC card is erased (step S48) and the IC card is returned to the customer (step S49). If and when all of the requirements are satisfied, the following transaction processing is performed in accordance with a predetermined kind of transaction.

If and when the customer sets in advance a transaction number 1 (payment) (step S50), it is determined whether the secret number read out from the RAM 4 of the IC card is correct or not (step S51). If correct, the terminal transmits to the CPU of the center for each bank the transaction data read out from the ROM 3 and RAM 4 of the IC card (step S52) in response to the data as transmitted to the center, the center retrieves and renews the corresponding file and provides an instruction of permission for payment to the terminal. Upon receipt of this instruction (step S53), the terminal instructs a slip issuing machine 18 to issue a payment slip and instruct the paper discharging portion 20 to discharge the necessary papers to the client (step S54). After completion of payment to a customer, the contents stored in the RAM 4 of the IC card are erased for security (step S55) and the IC card is returned to the customer in accordance with the program (step S56) and then the transaction is completed.

If and when the customer presets in advance a transaction number 2 (deposit) (step S57), the customer inserts papers to be deposited to the paper receiving portion 19 (step S58). The paper receiving portion 19 counts the number of the papers (step S59) and determines whether the counted amount coincides with the amount stored in advance in the RAM 4 of the IC card (step S60). If these amounts coincide with each other, the terminal transmits to the center CPU of the bank the transaction data read out from the ROM 3 and RAM 4 of the IC card (step S61). Thus, the center retrieves and renews the corresponding file in accordance with the transmitted data. As a result, a deposit transaction processing is terminated and then the content of transaction stored in the RAM 4 of the IC card is erased (step S62) and the IC card is returned to the customer in accordance with the program (step S63).

If and when the customer presets the transaction number 3 (transfer) (step S64), it is determined whether the secret number read out from the RAM 4 of the IC card is correct or not (step S65). If correct, the terminal transmits to the center CPU of the bank the transaction data read out from the ROM 3 and RAM 4 of the IC card (step S66). The center CPU communicates with the bank to be transferred, in response to the data such as the bank to be transferred and the account number thereof, and an amount of transfer which are entered in advance. As a result, the transfer transaction is completed (step S67), and the content of transaction stored in the RAM 4 of the IC card is erased (step S68) and the IC card is returned to the customer in accordance with the program (step S69).

As described in the foregoing, in accordance with the present embodiment, a transaction number, a secret number and a transaction amount, which are entered through the terminal in transaction processing in a conventional system, can be securely entered in advance into an IC card, so that a customer can keep a secret of transaction. Particularly, if the transaction number is set as deposit or transfer, an unfair user can not use the IC card for the purpose of payment and hence a good security is obtained. In addition, an operating time period when a customer can handle or operate a terminal can be decreased and hence efficiency of transaction processing can be improved.

Fig. 9 is a flow diagram explaining a transaction processing of a terminal for use with an IC card, which is an embodiment of the present invention. The embodiment shown in Fig. 9 is the same as the financial transaction processing system as described referring to Figs. 1 to 8, except for the following points.

More particularly, whereas in the steps S55, S62 and S68 of Fig. 8, the storage contents of the RAM 4 of the IC card are all erased, in the flow diagram of Fig. 9, only a secret number is erased in the steps S70 and S71, instead of the steps S60 and S68, and erasing the storage contents of the RAM 4 in the step S62 is not performed.

More specifically, if and when a customer sets in advance a transaction number 1 (payment) (step S50), only the secret number out of a contents stored in the RAM 4 of the IC card is erased for safety in response to a command from a terminal when payment processing to a customer is completed (step S70) and the IC card is returned to a customer in accordance with the program (step S56) and the transaction is completed.

If and when a customer sets in advance a transaction number 2 (deposit) (step S57), the transaction contents stored in the RAM 4 of IC card are never erased after the completion of deposit transaction and the IC card is returned to a customer in accordance with a program (step S63) and a transaction is completed.

If and when a customer sets in advance a transaction number 3 (transfer) (step S64), only a secret number out of the transaction contents stored in the RAM 4 of the IC card is erased, for safety, in response to a command from the terminal (step S71), after completion of transfer transaction (step S67), and the IC card is returned to a customer in accordance with a program (step S69) and the transaction is completed.

As described in the foregoing, in accordance with the present embodiment, after completion of transaction, a secret number stored in the IC card can be erased, so that unfair use can be prevented, and other transaction record relating to transaction amount and the like can be left in the IC card.

Fig. 10 is a memory map of an IC card of another embodiment of the present invention, Fig. 11 is a flow diagram explaining a transaction data storing operation of the IC card, Fig. 12 is a memory map of a terminal for communicating with the IC card and Fig. 13 is a flow diagram explaining a transaction processing of the terminal.

The embodiment shown in Figs. 10 to 13 is the same as the financial transaction processing system shown in Figs. 1 to 8, except for the following points.

As shown in the step S72 of Fig. 11, a customer sets a second effective time period and enters the data thereof into the IC card. Meanwhile, in the present embodiment, an effective time period so far described as a fixed data is particularly referred to as a first effective time period. The second effective time period is determined in consideration of the time interval from the time of the data entrance to the arrival to a bank. That is, first the time when transaction will be completed is expected and then the second effective time period is set so that the period can lapse after completion of transaction. As shown in Fig. 10, the second effective time period is stored in the storage region of the RAM 4 of the IC card (step S73).

In case where a transaction processing is performed using an IC card in which the above described second effective time period is stored, it is determined in the terminal whether the time when the transaction in question is being performed is in the second effective time period stored in the RAM 4 of the IC card, as shown in the step S74 of Fig. 13. If and when the second effective time period lapses, the contents stored in the RAM 4 of the IC card are erased (step S48) and the IC card is returned to a customer (step S49). If and when the second effective time period does not lapse, a transaction processing is performed in accordance with the kind of transaction as set in advance.

As described in the foregoing, in accordance with the present embodiment, security for transaction can be increased by setting the desired effective time period, because even if the IC card happens to be owned by an unfair user through theft, loss and the like, the unfair use can not be realized if the effective time period lapses.

Meanwhile, although in the above described embodiments, a transaction number, a secret number and a transaction amount are stored in advance in an IC card, it may be possible to make an IC card store only a transaction number prior to transaction processing and then to enter a secret number and a transaction amount by using a terminal at the time of transaction processing, and, in addition, it may be also possible to make the IC card store a secret number and a transaction amount, prior to the transaction processing and then enter a transaction number using a terminal at the time of transaction.

## Claims

**1.** A financial transaction processing system comprising: an integrated circuit card for use in financial transaction processing, including

first storing means (4) for storing data necessary for the financial transaction processing;

second storing means (3) containing a program of processing procedures for performing the financial transaction;

data entering means (6) for entering said data necessary for financial transaction processing into said first storing means;

data display means (5) for displaying said entered data; and

data processing means (2) for processing said entered data in accordance with said program stored in said second storing means;

terminal means for communicating with said integrated circuit card, including

data reading means (15) for reading out the data stored in said first storing means; and

transaction processing means (22) for performing said financial transaction in accordance with said read data, characterized by

said terminal means comprising

transaction termination detecting means for detecting termination of said transaction processing, and

data erasing means (step S70 and step S71) responsive to the output of said transaction termination detecting means for erasing a portion of the data stored in said first storing means (4), said erased data including a secret number.

**2.** A financial transaction processing system in accordance with claim 1, wherein

said integrated circuit card includes third storing means (step S73) for storing an effective time period of the data necessary for financial transaction processing, the data of the effective time period being entered by said data entering means (6), said terminal means includes

effective time period reading means for reading said effective time period stored in said third storing means, and

effective time period detecting means (step S74) for detecting that the time when transaction is now being performed is within said effective time period,

said data reading means being responsive to the output of said effective time period detecting means for reading the data stored in said first storing means (4).

## Patentansprüche

**1.** Verarbeitungseinrichtung für finanzielle Transaktionen mit

einer IC-Karte zur Verwendung bei der Finanztransaktionsverarbeitung, welche aufweist

erste Speichermittel (4) zum Speichern von für die Finanztransaktionsverarbeitung notwendigen Daten,

zweite Speichermittel (3), welche ein Programm für Verarbeitungsabläufe zur Durchführung der Finanztransaktion enthalten,

Dateneingabemittel (6) zum Eingeben der für die Finanztransaktionsverarbeitungnotwendigen Daten in die ersten Speichermittel,

Datenanzeigemittel (5) zum Anzeigen der eingegebenen Daten, und

Datenverarbeitungsmittel (2) zum Verarbeiten der eingegebenen Daten gemäß dem in den zweiten Speichermitteln gespeicherten Programm;

mit Terminalmitteln zum Informationsaustausch mit der IC-Karte, welche aufweisen

Datenlesemittel (15), zum Auslesen von in den ersten Speichermitteln gespeicherten Daten, und

Transaktionsverarbeitungsmittel (22) zur Durchführung der Finanztransaktion gemäß den gelesenen Daten, dadurch gekennzeichnet, daß

die Terminalmittel

Transaktionsbeendigungsfeststellmittel zum Feststellen einer Beendigung der Transaktionsverarbeitung, und

Datenlöschmittel (Schritt S70 und Schritt S71), die auf die Ausgabe der Transaktionsbeendigungsfeststellmittel ansprechen, zum Löschen eines Teils der in den ersten Speichermitteln (4) gespeicherten Daten, wobei die gelöschten Daten eine Geheimnummer enthalten.

**2.** Einrichtung zur Verarbeitung einer finanziellen Transaktion nach Anspruch 1, bei welcher die IC-Karte dritte Speichermittel (Schritt S73) zum Speichern einer wirksamen Zeitdauer der für die Finanztransaktionsverarbeitung nötigen Daten aufweist, wobei die Daten der effektiven Zeitdauer mit den Eingabemitteln (6) eingegeben werden, wobei

die Terminalmittel

Lesemittel für die effektive Zeitdauer zum Lesen der in den dritten Speichermitteln gespeicherten effektiven Zeitdauer, und

Feststellungsmittel (Schritt S74) für die effektive Zeitdauer zum Feststellen, daß die Zeit, zu der die Transaktion gerade durchgeführt wird, innerhalb der effektiven Zeitdauer liegt, enthalten,

wobei die Datenlesemittel auf die Ausgabe der Feststellungsmittel für die wirksame Zeitdauer mit dem Lesen der in den ersten Speichermitteln (4) gespeicherten Daten ansprechen.

## Revendications

**1.** Un système de traitement de transactions financières comprenant : une carte à circuit intégré à utiliser dans le traitement de transactions financières incluant

un premier moyen de mémoire (4) pour mémoriser des données nécessaires pour le traitement de transactions financières;

un deuxième moyen de mémoire (3) contenant un programme de procédures de traitement pour effectuer la transaction financière;

un moyen d'entrée de donnée (6) pour entrer dans ledit premier moyen de mémoire lesdites données nécessaires au traitement de transactions financières;

un moyen d'affichage de données (5) pour afficher ladite entrée de données; et

un moyen de traitement de données (2) pour traiter lesdites données entrées conformément audit programme mémorisé dans ledit deuxième moyen de mémorisation;

un moyen de terminal pour communiquer avec ladite carte à circuit intégré, incluant

un moyen de lecture de données (15) pour lire les données mémorisées dans ledit premier moyen de mémoire; et

un moyen de traitement de transactions (22) pour effectuer ladite transaction financière conformément auxdites données lues, caractérisé en ce que

ledit moyen de terminal comprend

un moyen de détection d'achèvement de transactions pour détecter l'achèvement dudit processus de transactions, et

un moyen d'effacement de données (étape S70 et étape S71) sensible à la sortie dudit moyen de détection d'achèvement de transactions pour effacer une partie des données mémorisées dans ledit premier moyen de mémoire (4), lesdites données effacées incluant un numéro secret.

**2.** Un système de traitement de transactions financières selon la revendication 1, dans lequel

la carte à circuit intégré inclut un troisième moyen de mémoire (étape S73) pour mémoriser un laps de temps effectif des données nécessaires pour le traitement de transactions financières, les données du laps de temps effectif étant entrées par ledit moyen d'entrée de données (6),

ledit moyen de terminal inclut

un moyen de lecture de laps de temps effectif pour lire ledit laps de temps effectif mémorisé dans ledit troisième moyen de mémoire, et

un moyen de détection de laps de temps effectif (étape S74) pour détecter que le temps où la transaction est actuellement en cours d'exécution se trouve à l'intérieur dudit laps de temps effectif,

ledit moyen de lecture de données étant sensible à la sortie dudit moyen détecteur de laps de temps effectif pour lire les données mémorisées dans ledit premier moyen de mémoire (4).

FIG. 1

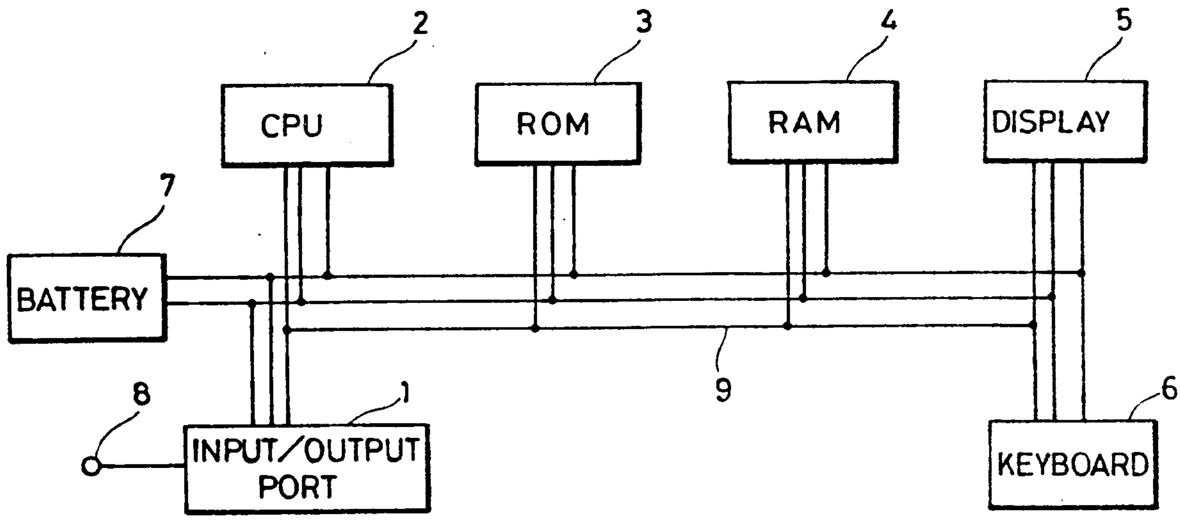
2
3
4
5
CPU
ROM
RAM
DISPLAY
7
BATTERY
8
1
9
6
INPUT/OUTPUT PORT
KEYBOARD

FIG. 2

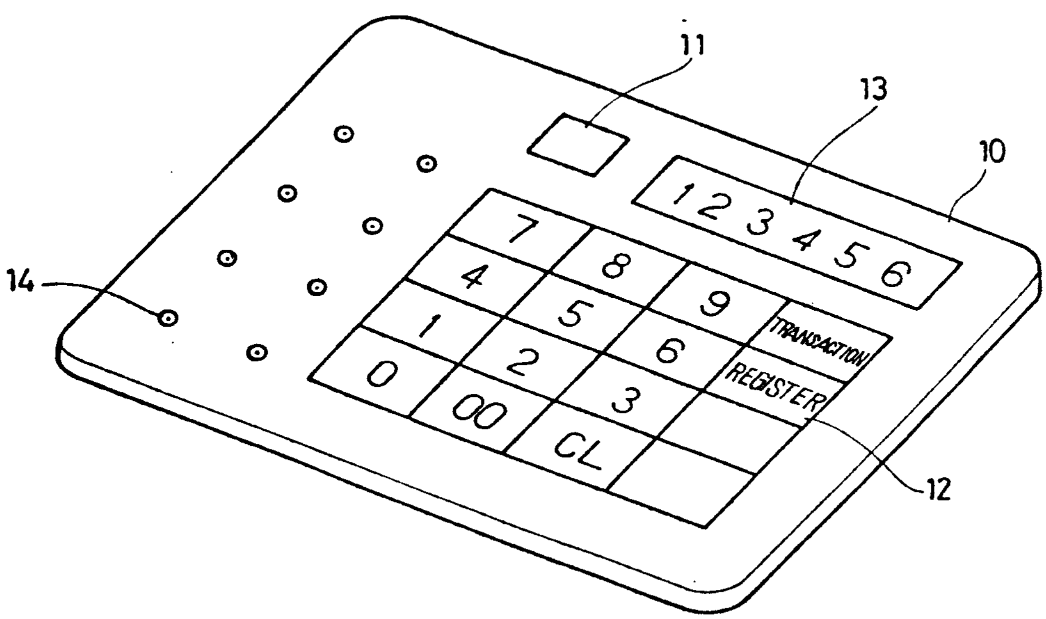
11
13
10
14
1 2 3 4 5 6
7
8
4
9
5
1
6
2
0
3
00
CL
TRANSACTION
REGISTER
12

FIG. 3

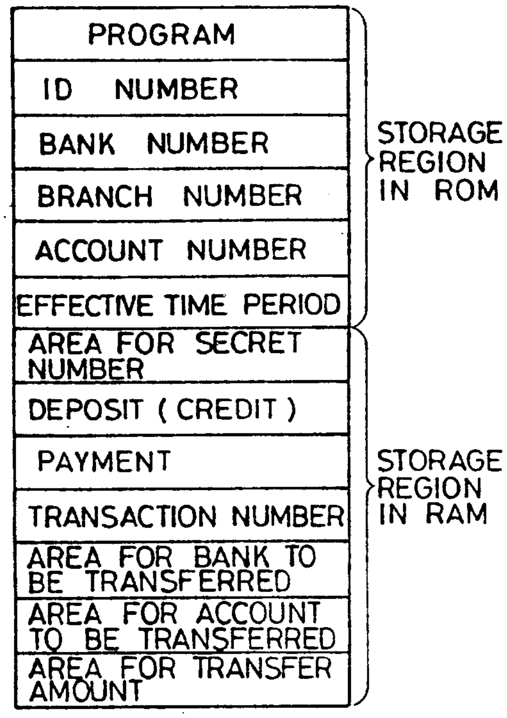


FIG. 6

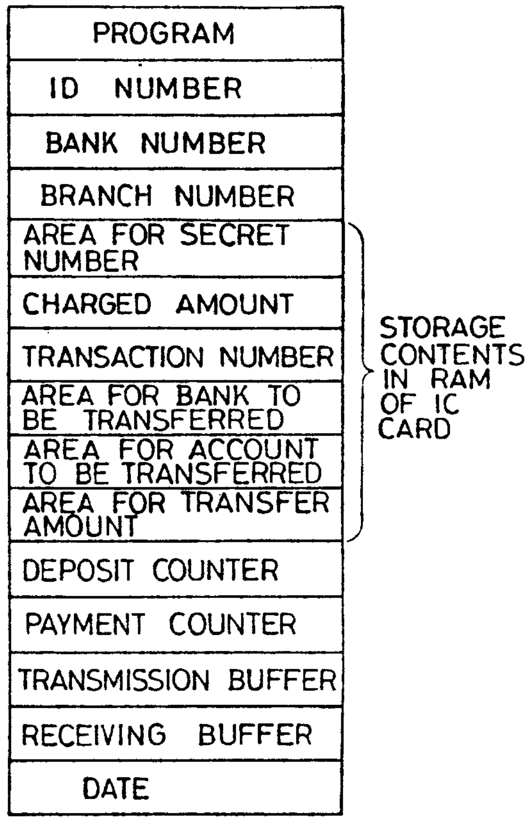


FIG. 5

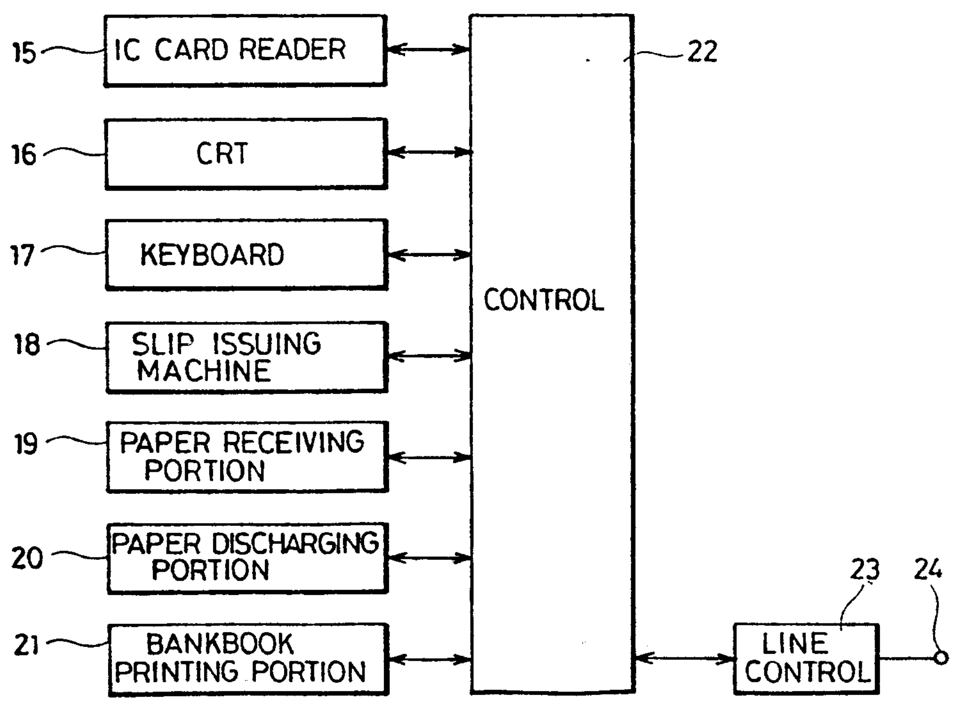

FIG. 4

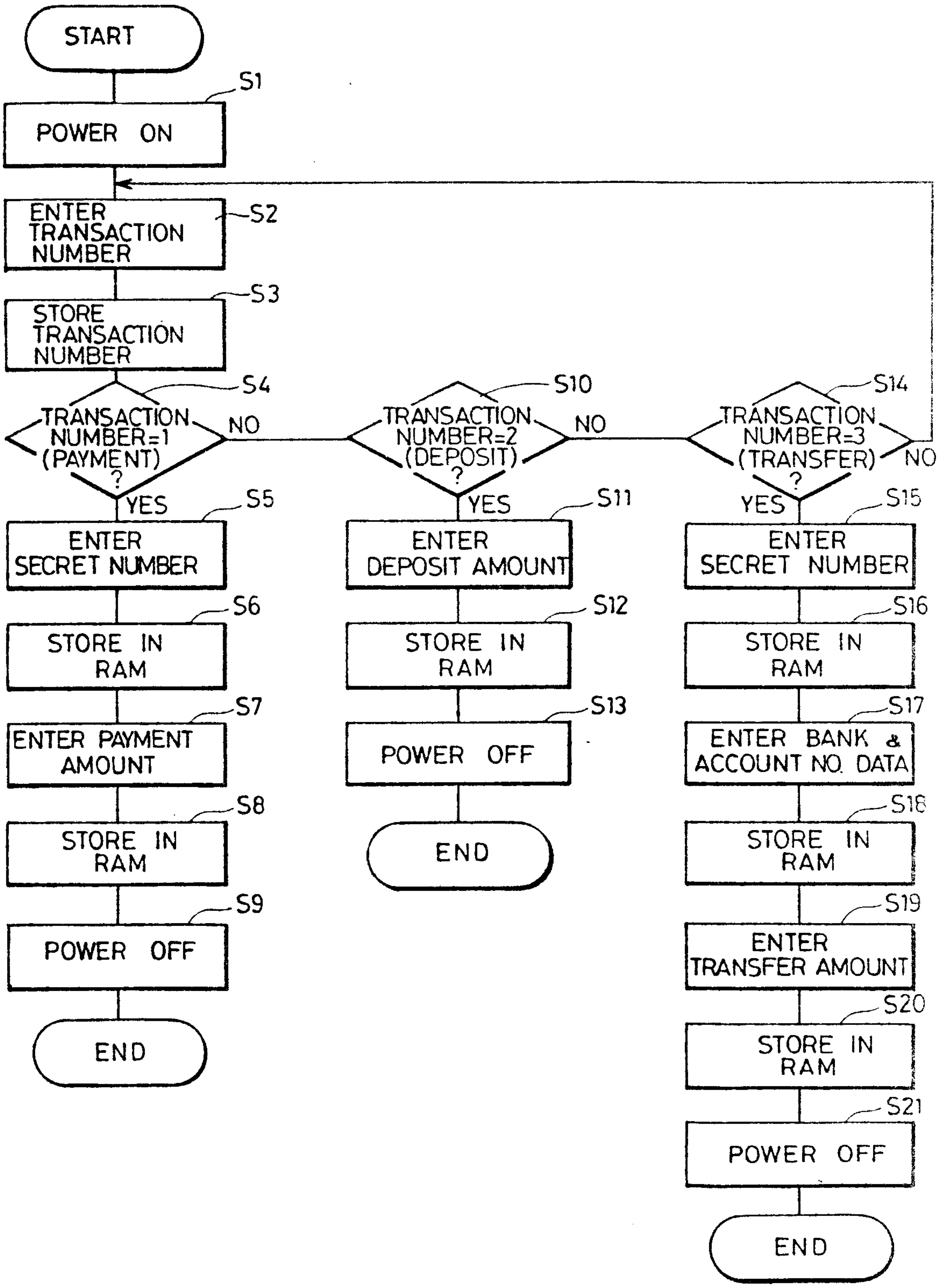
START
S1
POWER ON
S2
ENTER TRANSACTION NUMBER
S3
STORE TRANSACTION NUMBER
S4
TRANSACTION NUMBER=1 (PAYMENT) ?
NO
YES
S5
ENTER SECRET NUMBER
S6
STORE IN RAM
S7
ENTER PAYMENT AMOUNT
S8
STORE IN RAM
S9
POWER OFF
END
S10
TRANSACTION NUMBER=2 (DEPOSIT) ?
NO
YES
S11
ENTER DEPOSIT AMOUNT
S12
STORE IN RAM
S13
POWER OFF
END
S14
TRANSACTION NUMBER=3 (TRANSFER) ?
NO
YES
S15
ENTER SECRET NUMBER
S16
STORE IN RAM
S17
ENTER BANK & ACCOUNT NO. DATA
S18
STORE IN RAM
S19
ENTER TRANSFER AMOUNT
S20
STORE IN RAM
S21
POWER OFF
END

FIG. 7

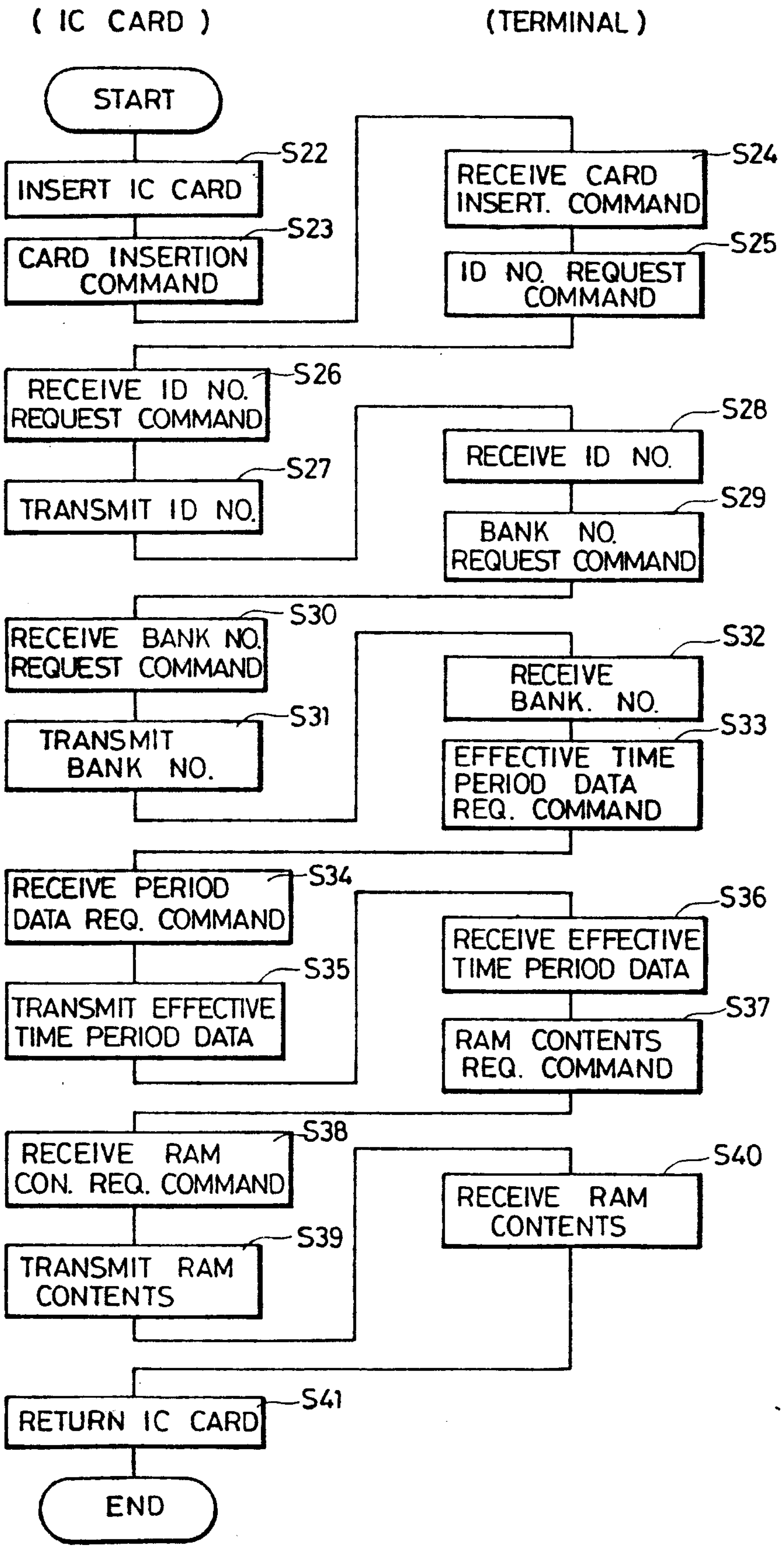
( IC CARD )
(TERMINAL)
START
INSERT IC CARD
S22
CARD INSERTION COMMAND
S23
RECEIVE CARD INSERT. COMMAND
S24
ID NO. REQUEST COMMAND
S25
RECEIVE ID NO. REQUEST COMMAND
S26
TRANSMIT ID NO.
S27
RECEIVE ID NO.
S28
BANK NO. REQUEST COMMAND
S29
RECEIVE BANK NO. REQUEST COMMAND
S30
TRANSMIT BANK NO.
S31
RECEIVE BANK. NO.
S32
EFFECTIVE TIME PERIOD DATA REQ. COMMAND
S33
RECEIVE PERIOD DATA REQ. COMMAND
S34
TRANSMIT EFFECTIVE TIME PERIOD DATA
S35
RECEIVE EFFECTIVE TIME PERIOD DATA
S36
RAM CONTENTS REQ. COMMAND
S37
RECEIVE RAM CON. REQ. COMMAND
S38
TRANSMIT RAM CONTENTS
S39
RECEIVE RAM CONTENTS
S40
RETURN IC CARD
S41
END

FIG. 8A

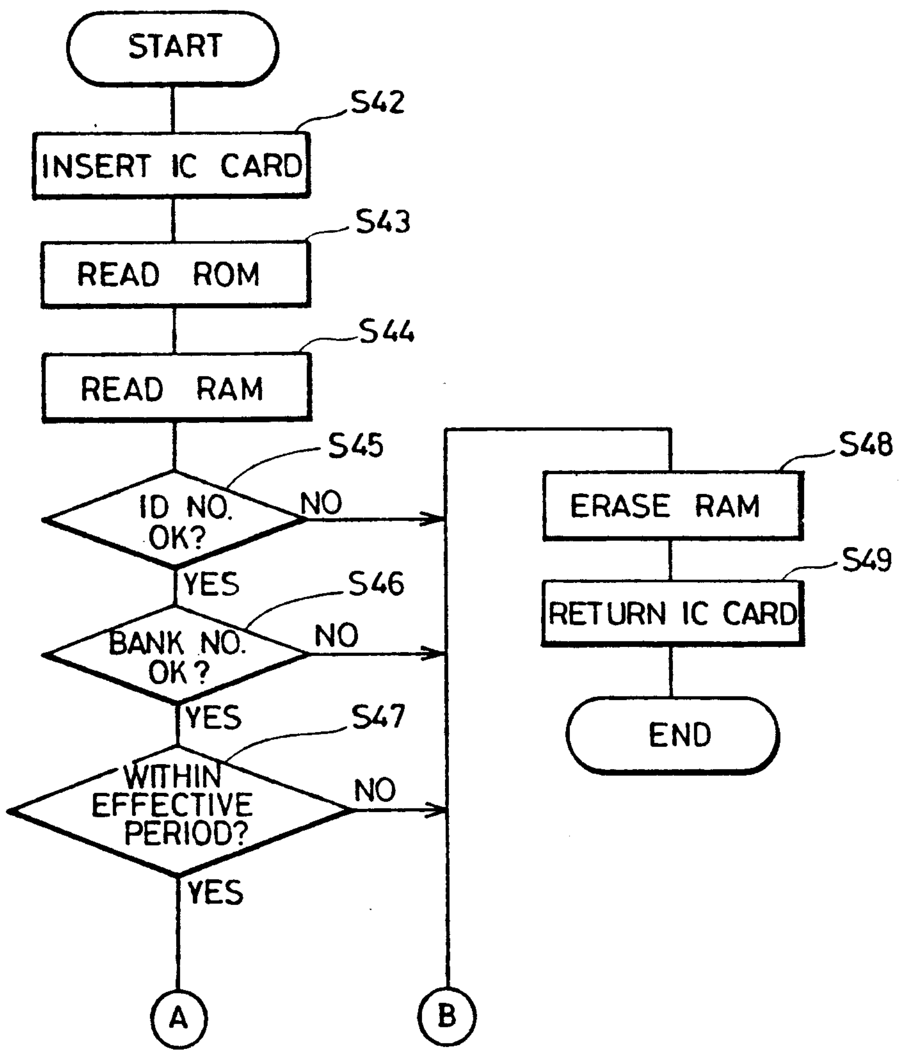
START
S42
INSERT IC CARD
S43
READ ROM
S44
READ RAM
S45
ID NO. OK?
NO
YES
S46
BANK NO. OK?
NO
YES
S47
WITHIN EFFECTIVE PERIOD?
NO
YES
A
B
S48
ERASE RAM
S49
RETURN IC CARD
END

FIG. 8B

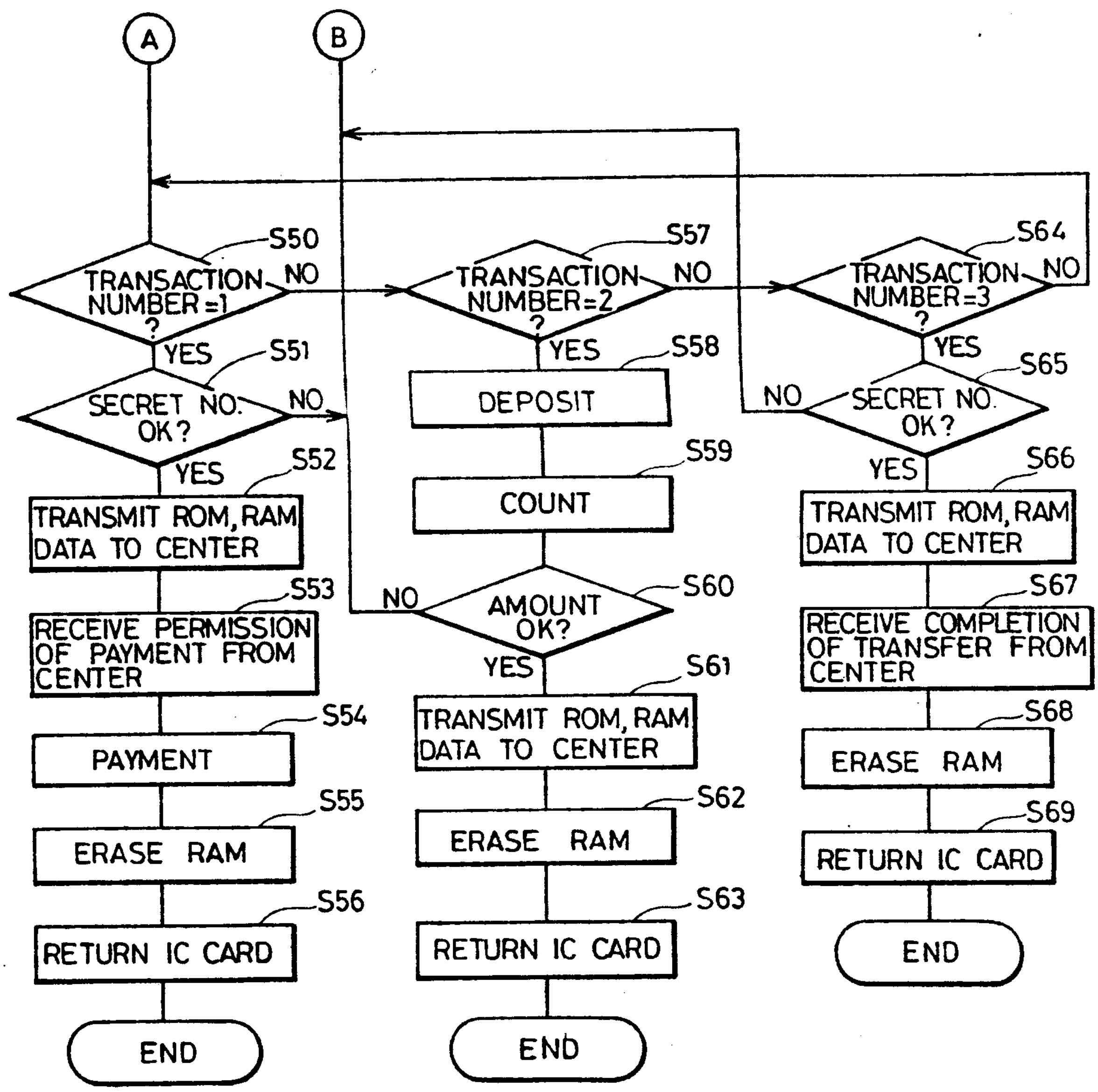
A
B
TRANSACTION NUMBER=1 ?
S50
NO
YES
SECRET NO. OK?
S51
NO
YES
TRANSMIT ROM, RAM DATA TO CENTER
S52
RECEIVE PERMISSION OF PAYMENT FROM CENTER
S53
PAYMENT
S54
ERASE RAM
S55
RETURN IC CARD
S56
END
TRANSACTION NUMBER=2 ?
S57
NO
YES
DEPOSIT
S58
COUNT
S59
AMOUNT OK?
S60
NO
YES
TRANSMIT ROM, RAM DATA TO CENTER
S61
ERASE RAM
S62
RETURN IC CARD
S63
END
TRANSACTION NUMBER=3 ?
S64
NO
YES
SECRET NO. OK?
S65
NO
YES
TRANSMIT ROM, RAM DATA TO CENTER
S66
RECEIVE COMPLETION OF TRANSFER FROM CENTER
S67
ERASE RAM
S68
RETURN IC CARD
S69
END

FIG. 9

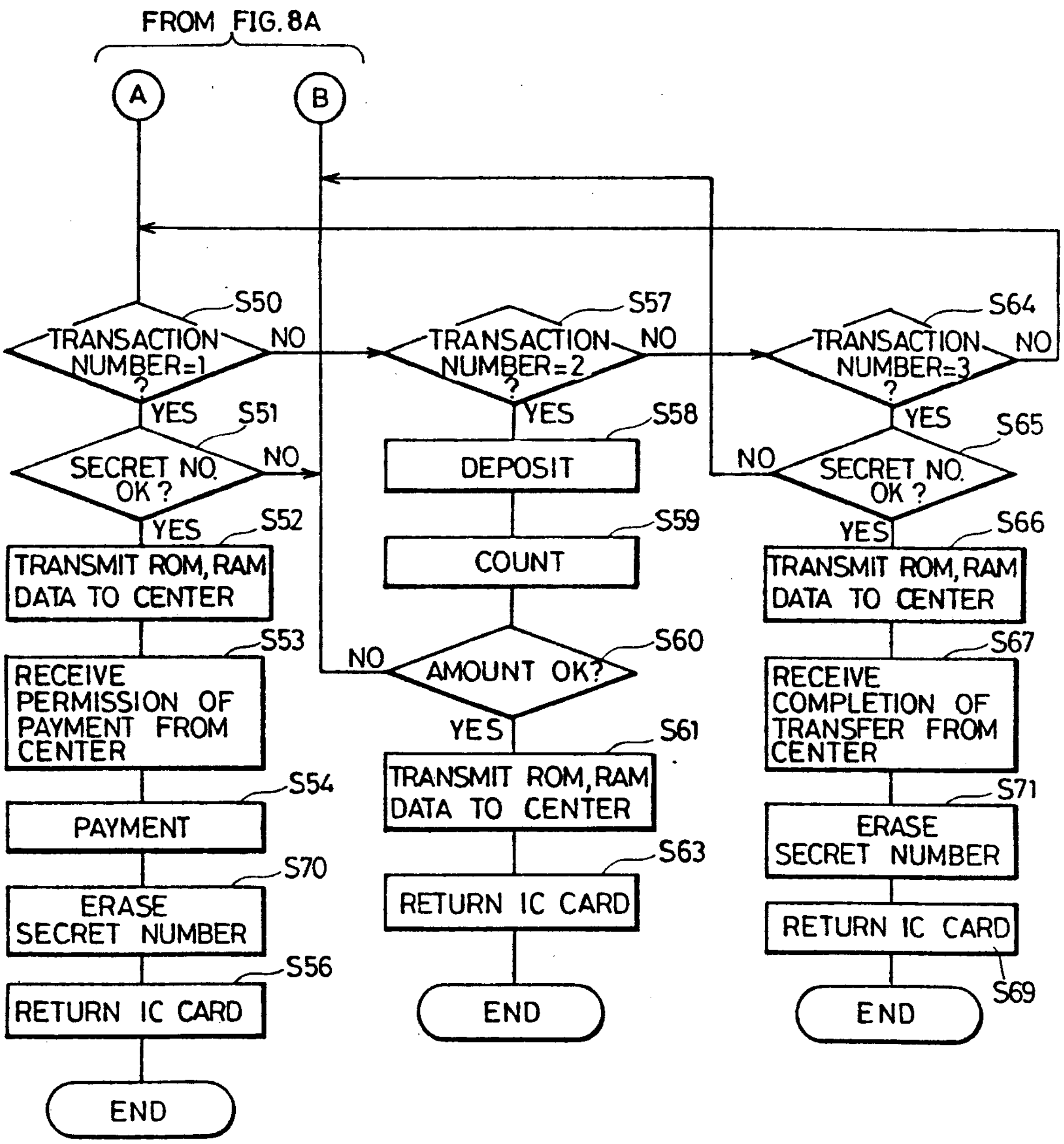
FROM FIG. 8A
A
B
S50
TRANSACTION NUMBER=1 ?
NO
YES
S51
SECRET NO. OK ?
NO
YES
S52
TRANSMIT ROM, RAM DATA TO CENTER
S53
RECEIVE PERMISSION OF PAYMENT FROM CENTER
S54
PAYMENT
S70
ERASE SECRET NUMBER
S56
RETURN IC CARD
END
S57
TRANSACTION NUMBER=2 ?
NO
YES
S58
DEPOSIT
S59
COUNT
S60
AMOUNT OK?
NO
YES
S61
TRANSMIT ROM, RAM DATA TO CENTER
S63
RETURN IC CARD
END
S64
TRANSACTION NUMBER=3 ?
NO
YES
S65
SECRET NO. OK ?
NO
YES
S66
TRANSMIT ROM, RAM DATA TO CENTER
S67
RECEIVE COMPLETION OF TRANSFER FROM CENTER
S71
ERASE SECRET NUMBER
RETURN IC CARD
S69
END

FIG. 10

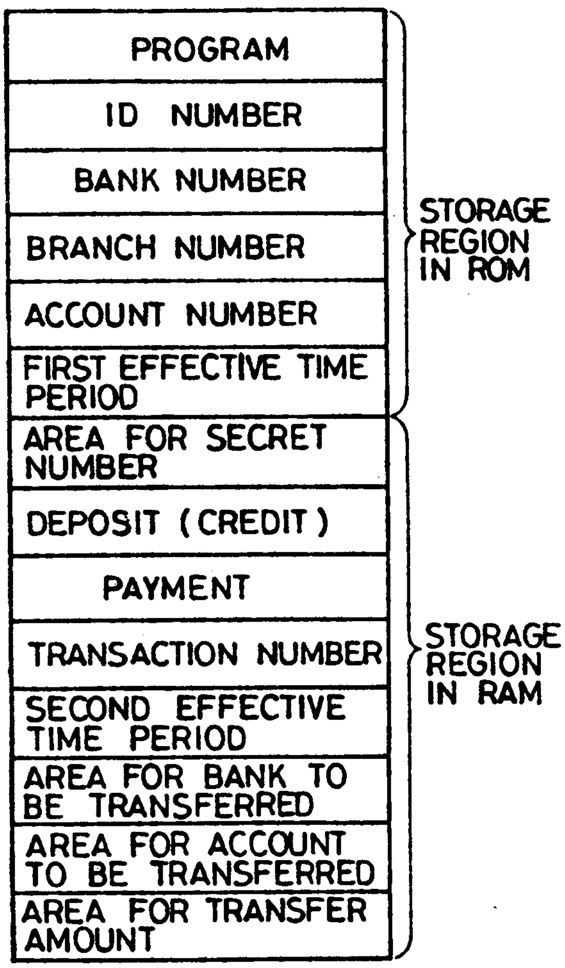
PROGRAM
ID NUMBER
BANK NUMBER
BRANCH NUMBER
ACCOUNT NUMBER
FIRST EFFECTIVE TIME PERIOD
STORAGE REGION IN ROM
AREA FOR SECRET NUMBER
DEPOSIT (CREDIT)
PAYMENT
TRANSACTION NUMBER
SECOND EFFECTIVE TIME PERIOD
AREA FOR BANK TO BE TRANSFERRED
AREA FOR ACCOUNT TO BE TRANSFERRED
AREA FOR TRANSFER AMOUNT
STORAGE REGION IN RAM

FIG. 12

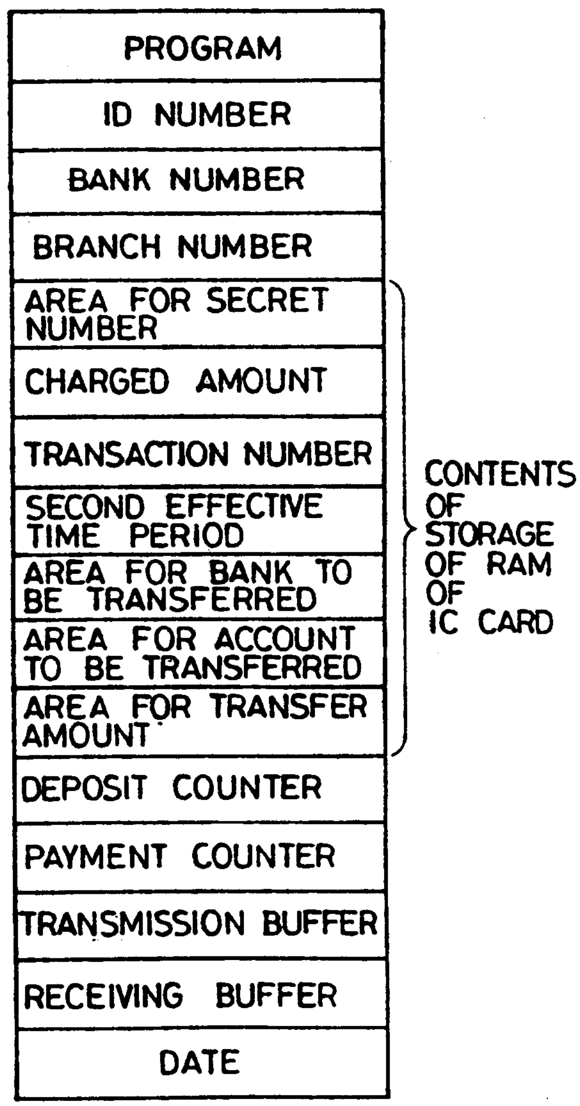
PROGRAM
ID NUMBER
BANK NUMBER
BRANCH NUMBER
AREA FOR SECRET NUMBER
CHARGED AMOUNT
TRANSACTION NUMBER
SECOND EFFECTIVE TIME PERIOD
AREA FOR BANK TO BE TRANSFERRED
AREA FOR ACCOUNT TO BE TRANSFERRED
AREA FOR TRANSFER AMOUNT
CONTENTS OF STORAGE OF RAM OF IC CARD
DEPOSIT COUNTER
PAYMENT COUNTER
TRANSMISSION BUFFER
RECEIVING BUFFER
DATE

FIG. 11

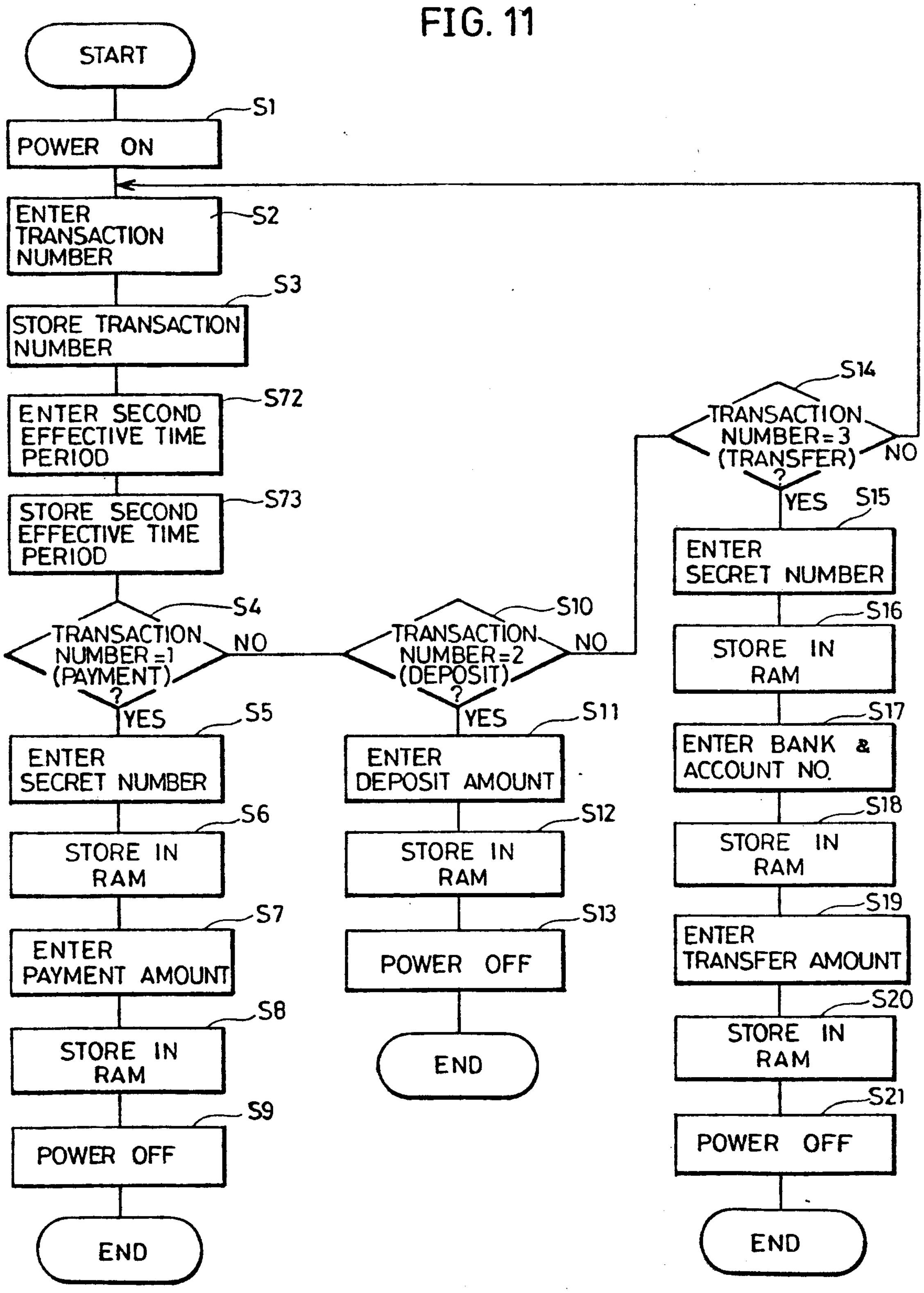
START
S1
POWER ON
S2
ENTER TRANSACTION NUMBER
S3
STORE TRANSACTION NUMBER
S72
ENTER SECOND EFFECTIVE TIME PERIOD
S73
STORE SECOND EFFECTIVE TIME PERIOD
S4
TRANSACTION NUMBER=1 (PAYMENT) ?
NO
YES
S5
ENTER SECRET NUMBER
S6
STORE IN RAM
S7
ENTER PAYMENT AMOUNT
S8
STORE IN RAM
S9
POWER OFF
END
S10
TRANSACTION NUMBER=2 (DEPOSIT) ?
NO
YES
S11
ENTER DEPOSIT AMOUNT
S12
STORE IN RAM
S13
POWER OFF
END
S14
TRANSACTION NUMBER=3 (TRANSFER) ?
NO
YES
S15
ENTER SECRET NUMBER
S16
STORE IN RAM
S17
ENTER BANK & ACCOUNT NO.
S18
STORE IN RAM
S19
ENTER TRANSFER AMOUNT
S20
STORE IN RAM
S21
POWER OFF
END

FIG. 13

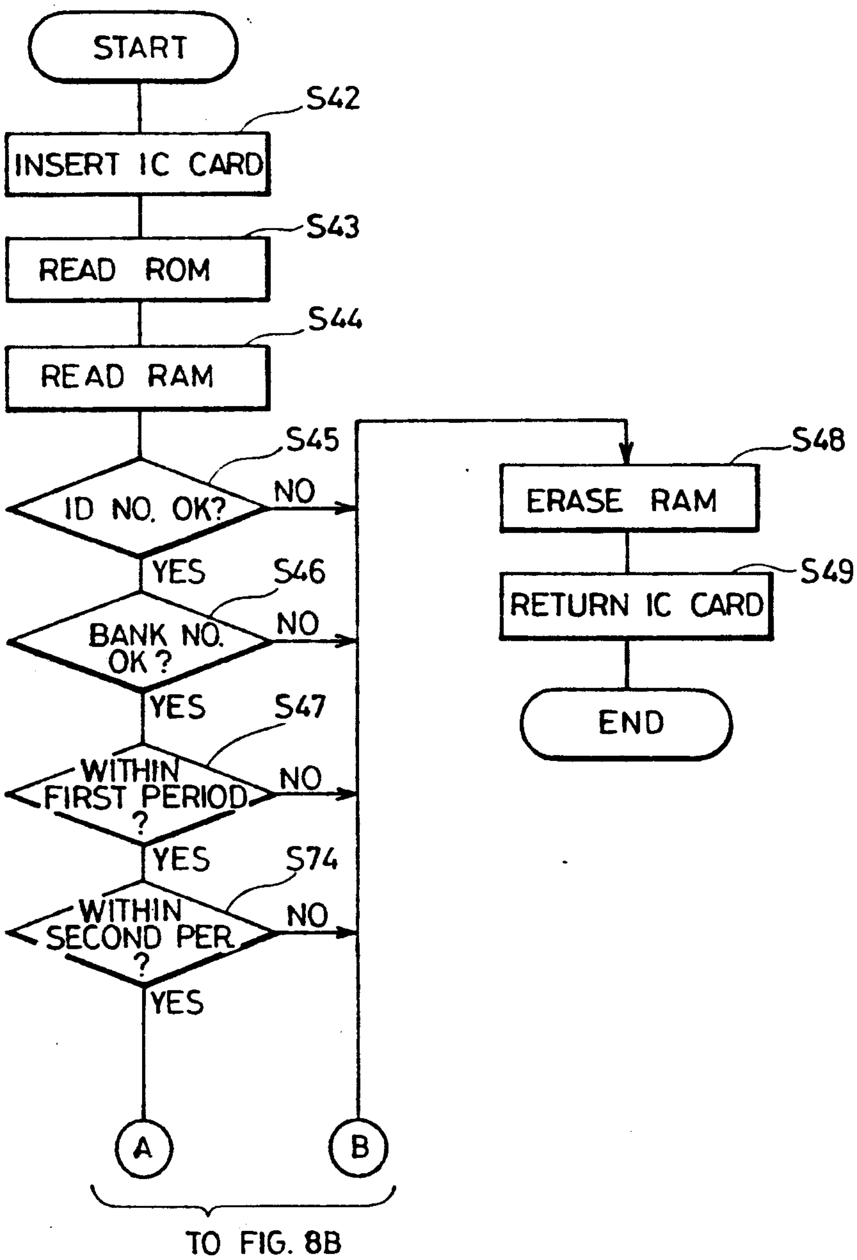
START
S42
INSERT IC CARD
S43
READ ROM
S44
READ RAM
S45
ID NO. OK?
NO
YES
S46
BANK NO. OK ?
NO
YES
S47
WITHIN FIRST PERIOD ?
NO
YES
S74
WITHIN SECOND PER. ?
NO
YES
A
B
TO FIG. 8B
S48
ERASE RAM
S49
RETURN IC CARD
END